# EUROPEAN PATENT SPECIFICATION

(11) **EP 1 777 118 B1**
(45) Date of publication and mention of the grant of the patent: **12.11.2008**
(21) Application number: 06019165.7
(22) Date of filing: 13.09.2006
(51) Int. Cl.: B60R 16/02, H02G 11/00

(54) **Wire harness between a fixed part and a movable part**
Kabelbaum zwischen einem festen Teil und einem bewegbaren Teil
Faisceau électrique entre une partie fixe et une partie mobile

(30) Priority: 18.10.2005 JP 2005303296
(43) Date of publication of application: 25.04.2007
(73) Proprietor: YAZAKI CORPORATION, Minato-ku Tokyo 108-8333 (JP)
(72) Inventor: Terada, Tomoyasu, Kosai-shi Shizuoka (JP)
(74) Representative: Grünecker, Kinkeldey, Stockmair & Schwanhäusser Anwaltssozietät

(56) References cited:
- EP-A1- 1 241 056
- DE-A1- 10 354 950
- FR-A- 2 879 848
- JP-A- 11 342 807

## Description

This invention relates to an installation apparatus for installing a wire harness over a fixed structural body (such for example as a vehicle body of an automobile) and a movable structural body (such as a slide seat or a slide door) movable relative to the vehicle body.

Document JP 11342807 discloses an apparatus according to the preamble of claim 1 and a method of preventing flexible flat cable from sagging in feeding device for automobile slide door and sagging preventive structure therefor.

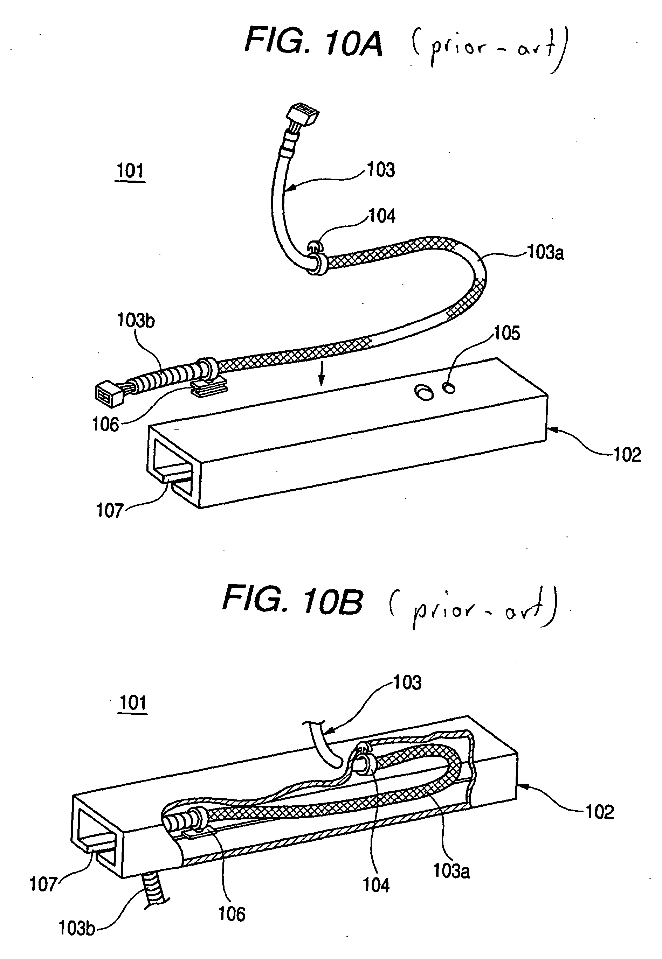

For example, an electrically-operated auxiliary equipment such as an electrically-operated slide mechanism is contained in a slide seat and a slide door of a vehicle such as an automobile. A wire harness is installed over a vehicle body and the slide seat or the slide door in order to supply electric power to such auxiliary equipment. Figs. 10A and 10B show one known related installation apparatus for installing a wire harness over a vehicle body and a slide door (see, for example, the document EP 1 108 621 A or family member JP-A-2001-171443).

The installation apparatus 101 disclosed in JP-A-2001-171443 is mounted at a lower portion of the inside of the slide door, and includes a case 102 of a generally-rectangular tubular shape in which the wire harness 103 is received in a generally U-shaped folded-back condition, as shown in Figs. 10A and 10B.

A portion 103a of the wire harness 103, received within the case 102, is covered at its outer periphery with a braided tube formed by weaving a filament of a resin (such as nylon or PET (polyethylene terephthalate)) into a cylindrical shape. A portion 103b of the wire harness 103, led out of the case 102 to the vehicle body, is covered at its outer periphery with a corrugated tube in the form of a cylindrical bellows made of a resin such as PP (polypropylene).

One end of the portion 103a of the wire harness 103 is held by a clamp 104 retainingly engaged in a retaining hole 105 formed in an upper wall of the case 102. The other end of the portion 103a is held by a clamp 106 which is engaged in a rail groove 107 formed in a bottom wall of the case 102, and is supported for movement in a direction of sliding movement of the slide door.

When the clamp 106 moves in accordance with the sliding movement of the slide door, the portion 103a of the wire harness 103, while suitably deformed, follows the clamp 106 with its U-shaped folded-back portion moved forward and rearward.

In the above installation apparatus 101, in accordance with the sliding movement of the clamp 106, the portion 103a of the wire harness 104, received within the case 102, moves in sliding contact with inner surfaces of the case 102. Generally, the portion 103a of the wire harness 103 has heretofore been covered with a flexible corrugated tube of the type described above. In the above installation apparatus 101, however, the portion 103a is covered with the above braided tube.

As compared with the above corrugated tube, the braided tube has more excellent flexibility, and has smaller friction on its surface, and has more excellent wear resistance. Therefore, this braided tube is suitably used for protecting a wire bundle of the portion 103a of the wire harness 103 without preventing the deformation of this portion 103a. However, the surface of the braided tube is slippery since this surface has small friction. Therefore, in the above installation apparatus 101, the clamps 104 and 106 are fastened tightly on the braided tube, and are fixed to the wire bundle passing through this braided tube.

Here, for example, when the clamp 106 slidingly moves in such a condition that the forward and rearward movement of the folded-back portion of the wire harness 103 is prevented by a foreign matter intruding into the case 102, the portion 103a of the wire harness 103 is subjected to tension. In this case, a load acts directly on the wire bundle of the wire harness 103 since the wire harness is held by the clamps 104 and 106, and this leads to a fear that the wire bundle is cut.

This invention has been made in view of the above circumstances, and an object of the invention is to provide an installation apparatus in which a wire harness received within a case can be smoothly operated, and besides this wire harness can be positively protected.

The above object has been achieved by an installation apparatus of the present invention recited in the following Paragraphs (1) to (5).
(1) An installation apparatus for installing a wire harness over a fixed structural body and a movable structural body which is slidably provided to the fixed structural body, the installation apparatus comprising:
   a case that receives the wire harness such that the wire harness extends in a sliding direction of the movable structural body, and is folded back into a generally U-shape;
   a slider that is slidably supported on the case so as to move in the sliding direction of the movable structural body, and is movable in accordance with a sliding movement of the movable structural body;
   a first fixing member that holds a proximal end-side portion of the wire harness extending from the folded-back portion thereof toward a proximal end of the wire harness, and fixes the wire harness to the case; and
   a second fixing member that holds a distal end-side portion of the wire harness extending from the folded-back portion thereof toward a distal end of the wire harness, and fixes the wire harness to the slider,
   wherein the wire harness is covered with a braided tube; and
   wherein at least one of the first fixing member and the second fixing member holds only the braided tube covering the wire harness.
(2) The braided tube is formed by weaving a resin filament into a tubular shape.
(3) At least one of the first fixing member and the second fixing member is formed integrally with the braided tube in a state that one end portion of the braided tube is embedded in one end portion of the at least one of the first fixing member and the second fixing member in concentric relation thereto.
(4) At least one of the first fixing member and the second fixing member has a retaining portion. The retaining portion penetrates (extends through) a peripheral wall of the braided tube.

In the installation apparatus of the construction of the above Paragraph (1) and (2), the wire harness is covered with the braided tube having excellent flexibility, relatively small friction on its surface and excellent wear resistance, and therefore in accordance with the sliding movement of the slider, the wire harness can smoothly move in sliding contact with an inner surface of the case, and can be flexibly deformed, and also can withstand the friction due to sliding contact with the inner surface of the case.

Here, the braided tube is formed by weaving the filament made of a resin such for example as nylon, polyester, PET or PA (polyamide) into a tubular shape, and this braided tube can be axially contracted and expanded because of its structure (The amount of expansion is much smaller than the amount of contraction.). This braided tube, when axially contracted, is increased in diameter, and also the braided tube, when axially expanded, is decreased in diameter.

At least one of the first and second fixing members (which hold the wire harness, and fix the wire harness respectively to the case and the slider) holds only the braided tube, and therefore even when the wire harness is subjected to tension, a load is applied only to the braided tube, and will not act on a wire bundle of the wire harness.

In the installation apparatus of the construction of the above Paragraph (3), at least one of the first and second fixing members can positively and firmly hold only the braided tube which has the slippery surface.

In the installation apparatus of the construction of the above Paragraph (4), at least one of the first and second fixing members can positively and easily hold only the braided tube which has the slippery surface.

In the present invention, there is provided the installation apparatus in which the wire harness received within the case can be smoothly operated, and besides this wire harness can be positively protected.

The above objects and advantages of the present invention will become more apparent by describing in detail preferred exemplary embodiments thereof with reference to the accompanying drawings, wherein:
Fig. 1 is a perspective view showing a first embodiment of an installation apparatus of the present invention applied to a slide seat for a vehicle;
Fig. 2 is an exploded, perspective view of the installation apparatus of Fig. 1;
Fig. 3 is a plan view of the installation apparatus of Fig. 1;
Fig. 4 is a cross-sectional view taken along the line IV-IV of Fig. 3;
Fig. 5 is a cross-sectional view of a first fixing member of the installation apparatus of Fig. 1;
Fig. 6 is a cross-sectional view of a first fixing member used in a second embodiment of an installation apparatus of the invention;
Fig. 7 is a cross-sectional view of a first fixing member used in a third embodiment of an installation apparatus of the invention;
Fig. 8 is a cross-sectional view showing the first fixing member of Fig. 7;
Fig. 9 is a cross-sectional view showing a first fixing member used in a fourth embodiment of an installation apparatus of the invention; and
Figs. 10A and 10B are exploded, perspective views of a related installation apparatus.

A preferred embodiment of an installation apparatus of the present invention will now be described in detail with reference to the drawings.

### (First Embodiment)

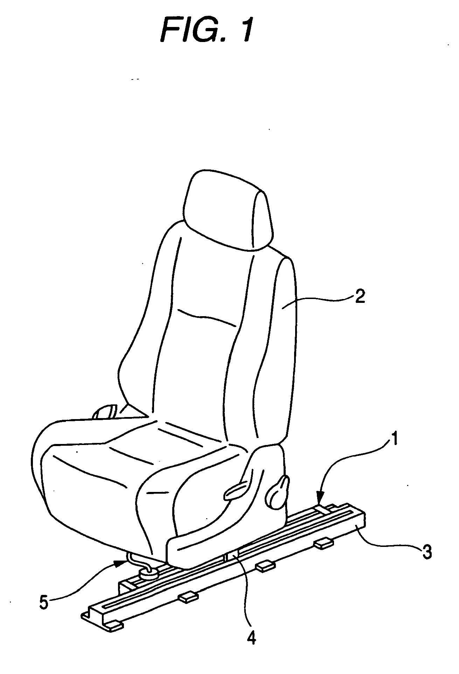

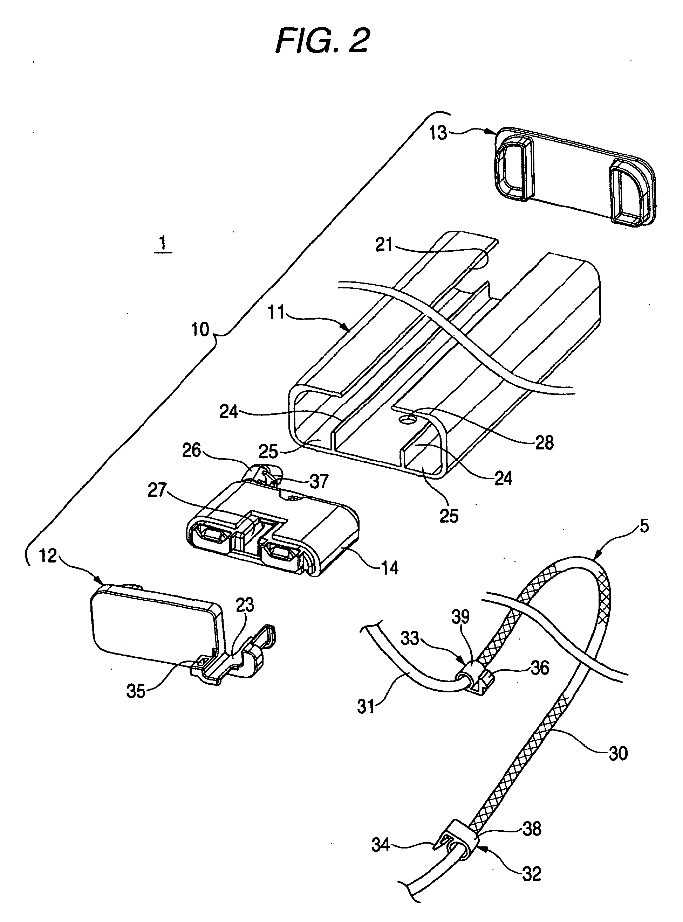

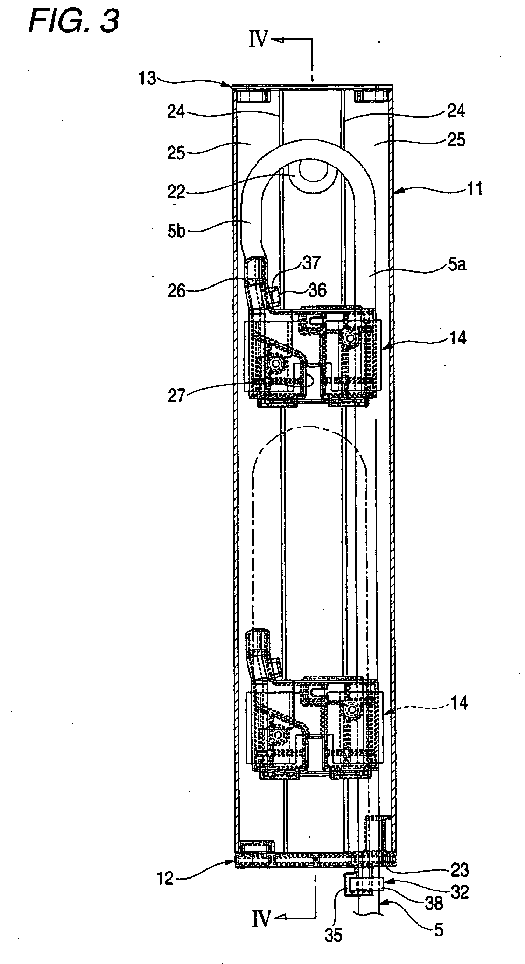

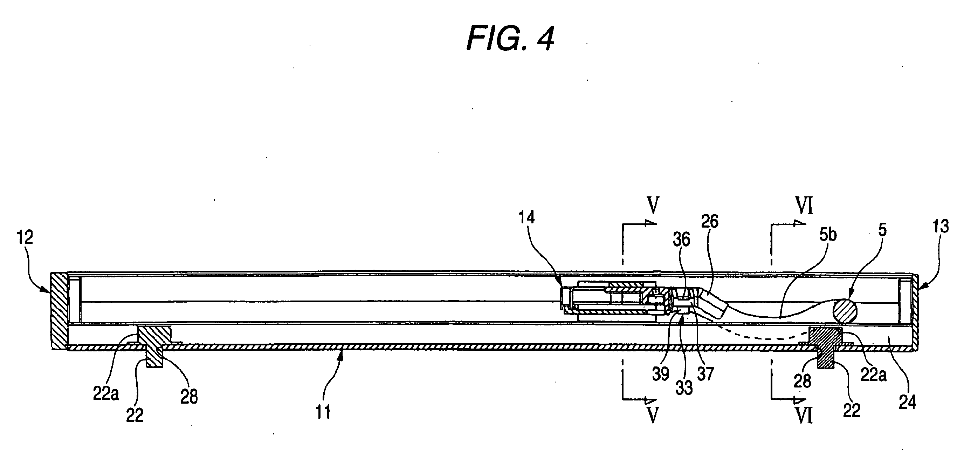

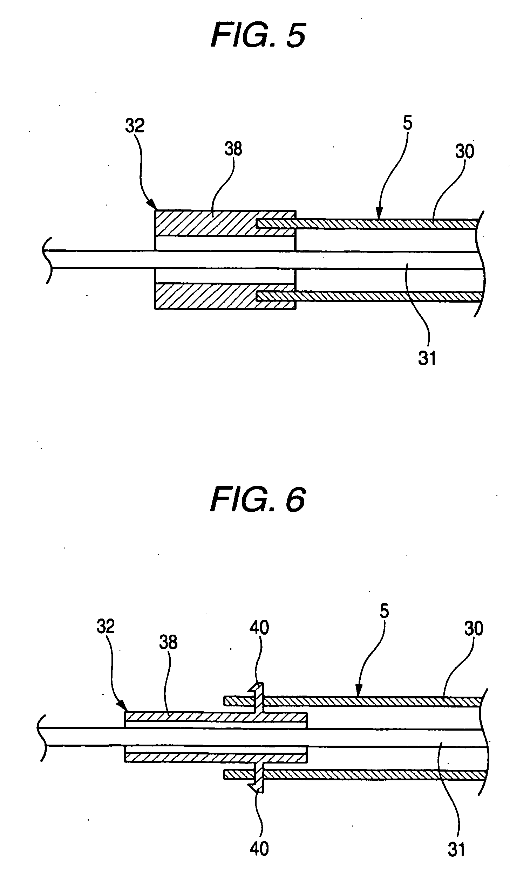

Fig. 1 is a perspective view showing a first embodiment of an installation apparatus of the invention applied to a slide seat for a vehicle, Fig. 2 is an exploded, perspective view of the installation apparatus of Fig. 1, Fig. 3 is a plan view of the installation apparatus of Fig. 1, Fig. 4 is a cross-sectional view taken along the line IV-IV of Fig. 3, Fig. 5 is a cross-sectional view of a first fixing member of the installation apparatus of Fig. 1.

As shown in Fig. 1, the installation apparatus 1 of this embodiment is applied to the slide seat (movable structural body) 2 for the vehicle. A guide rail 3 is mounted on a vehicle body (fixed structural body which is not shown), and extends in a forward-rearward direction of the vehicle body. A slider 4 is mounted on a bottom surface of the slide seat 2, and is engaged in the guide rail 3, and is supported on this guide rail 3 so as to slide in the forward-rearward direction of the vehicle body. With this construction, the slide seat 2 can slide in the forward-rearward direction of the vehicle body. The installation apparatus 1 is provided along the guide rail 3 in parallel, adjoining relation thereto, and installs a wire harness 5 over the vehicle body and the slide seat 2.

As shown in Fig. 2, the installation apparatus 1 comprises a case 10, and a slider 14 received within the case 10. The case 10 includes a case body 11 in the form of an elongate rectangular tubular member having a slit 21 formed in its upper wall and extending over an entire length thereof in the longitudinal direction thereof, and caps 12 and 13 mounted respectively at opposite end portions of the case body 11 to close these open ends. The case body 11 is mounted on the vehicle body, with its longitudinal axis disposed parallel to the direction of sliding movement of the slide seat 2.

An opening portion 23 is formed in one side of the cap 12 mounted at one end portion of the case body 11, and the wire harness 5, extending from the vehicle body, is introduced or led into the case 10 through this opening portion 23. The wire harness 5, led into the case 10 through this opening portion 23, is received in the case 10 in such a manner that this wire harness 5 is folded-back into a U-shape as shown in Fig. 3. In Fig. 3, the case body 11 is shown with its upper wall removed.

As shown in Fig. 2, that portion of the wire harness which is to be received within the case 10 is covered at its outer periphery with a braided tube 30 formed by weaving a filament of a resin (such as nylon, PET or PA (polyamide)) into a cylindrical tubular shape. First and second fixing members 32 and 33 are mounted at opposite end portions of the braided tube 30, respectively, and the first fixing member 32 holds a proximal end-side portion of the wire harness 5 extending from the folded-back portion thereof toward a proximal end thereof, and fixes the wire harness 5 to the case 10, while the second fixing member 33 holds a distal end-side portion of the wire harness 5 extending from the folded-back portion thereof toward a distal end thereof, and fixes the wire harness 5 to the slider 14.

The first fixing member 32 has a retaining piece portion 34 for insertion into a retaining hole 35 formed in the opening portion 23 of the cap 12. The retaining piece portion 34 of the first fixing member 32 is inserted into the retaining hole 35 in the cap 12, and is retainingly engaged in this retaining hole 35, and by doing so, the wire harness 5 held by the first fixing member 32 is fixed to the case 10.

As shown in Fig. 2, two ribs 24 and 24 are formed on and project from a bottom wall of the case body 11, and extend in the longitudinal direction of the case body 11, and are spaced from each other. A gap (hereinafter referred to as "wire harness receiving region 25") for receiving the wire harness 5 is formed between each rib 24 and a side wall of the case body 11 opposed to this rib 24.

As shown in Figs. 3 and 4, the wire harness 5, led into the case 10 through the opening portion 23 in the cap 12, is laid to extend in and along one wire harness receiving region 25 communicating with the opening portion 23, and then is folded-back into a U-shape while passing over the ribs 24 and 24, and is further laid to extend in and along the other wire harness receiving region 25. Namely, the two ribs 24 and 24 are disposed between an outward portion 5a and a return portion 5b of the wire harness 5 extending in the longitudinal direction of the case body 11, and in other words the two ribs 24 and 24 are arranged to intersect the U-shaped folded-back portion of the wire harness 5. The folded-back portion of the wire harness 5 is placed on the two ribs 24 and 24, and is spaced from the bottom wall of the case body 11.

As shown in Fig. 5, the slider 14 which is received within the case 10 is formed such that this slider is slightly spaced from the upper wall and opposite side walls of the case body 11 and the two ribs 24 and 24. The slider 14 is placed on the two ribs 24 and 24, and is supported for sliding movement in the longitudinal direction of the case body 11. The slider 14 can slide on inner surfaces of the opposite side walls of the case body 11 and upper edges of the two ribs 24 and 24, and therefore the sliding movement of the slider 14 is guided by these inner surfaces and these upper edges. In other words, the whole of the case body 11 functions as a guide rail for guiding the sliding movement of the slider 14.

An insertion opening for the insertion of the distal end of the wire harness 5 thereinto is formed in one end of the slider 14, and the distal end of the wire harness 5 is led into the slider 14 via this insertion opening. The distal end of the wire harness 5, introduced into the slider 14 through the insertion opening, passes through the slider 14, and is led out of the slider 14 through an opening 27 which is open upwardly at a widthwise-central portion of the slider 14.

As shown in Figs. 2, 3 and 4, a support plate 26 is formed at an edge portion of the insertion opening of the slider 14, and extends along the other wire harness receiving region 25 (in which that portion (i.e., the return portion 5b) of the wire harness 5, extending from the folded-back portion thereof toward the distal end thereof, is laid), and supports the distal end side-portion of the wire harness 5 which is to be introduced into the slider 14. A retaining hole 37 for the insertion of a retaining piece portion 36 of the second fixing member 33 (which holds the distal end-side portion of the wire harness) thereinto is formed in the support plate 26, and the retaining piece portion 36 of the second fixing member 33 is inserted into the retaining hole 37, and is retainingly engaged in this retaining hole 37, and by doing so, the wire harness 5 held by the second fixing member 33 is fixed to the slider 14.

The distal end of the wire harness 5, led out of the slider 14 through the opening 27 thereof, is further led out of the case 10 through the slit 21 formed in the upper wall of the case body 11, and is connected to an auxiliary equipment of the slide seat 2 and others. The slider 14 is connected via the slit 21 to the slide seat 2, for example, by a hook, and can slide together with the slide seat 2.

In accordance with the sliding movement of the slide seat 2, the slider 14, moves in sliding contact with the inner surfaces of the opposite side walls of the case body 11 and the upper edges of the two ribs 24 and 24 (that is, while guided by these inner surfaces and these upper edges) while suitably deforming the wire harness 5 within the case 10, with the folded-back portion of the wire harness 5 moved forward and rearward in the direction of sliding movement of the slider 14, as shown in Fig. 3. One side portion of the slider 14 overlies the outward portion 5a of the wire harness 5, and the slider 14 slides while suppressing the lifting of the outward portion 5a off the bottom wall of the case body 11.

As shown in Fig. 1, the slit 21 is formed in the widthwise-central portion of the upper wall of the case body 11, and extends over the entire length of the case body 11 in the longitudinal direction thereof. A width of the slit 21 is smaller than the distance between the two ribs 24 and 24 formed on the bottom wall of the case body 11, and the slit 21 is disposed vertically above the region between the two ribs 24 and 24. Therefore, when relatively-fine foreign matters, such as dust and gravel, intrude into the case 10 through the slit 21, these foreign matters are received between the two ribs 24 and 24.

As shown in Figs. 3 and 4, the case body 11 is fastened to the vehicle body, and thus is mounted on the vehicle body. Screw passage holes 28 are formed through that portion of the bottom wall of the case body 11 lying between the two ribs 24 and 24, and bolts (fastening members) 22 are passed respectively through the screw passage holes 28, and are threaded into the vehicle body, thereby fastening the case body 11 to the vehicle body. The two ribs 24 and 24 are formed such that these ribs are higher than heads 22a of the bolts 22. An impact wrench (tool) for fastening each bolt 22 is inserted into the case 10 from the upper side through the slit 21.

When the slider 14 is moved in accordance with the sliding movement of the slide seat 2, the outward portion 5a and return portion 5b of the wire harness 5 are reciprocally extended and shortened in such a manner that the U-shaped folded-back portion of the wire harness 5, while sliding over the upper edges of the two ribs 24 and 24, is moved forward and rearward in the direction of sliding movement of the slider 14. The bolts 22 are disposed between the two ribs 24 and 24, and the two ribs 24 and 24 are higher than the heads 22a of the bolts 22, and therefore the folded-back portion of the wire harness 5 and the slider 14 are smoothly moved forward and rearward without being caught by the heads 22a of the bolts 22.

Here, when foreign matters which can not be received between the two ribs 24 and 24, intrude into the case 10 through the slit 21, the folded-back portion of the wire harness 5, moving forward and rearward in accordance with the sliding movement of the slider 14, is caught by these foreign matters, and therefore is prevented from forward and rearward movement, so that tension is applied to the wire harness 5. In this case, in order that a load will not act on a bundle 31 of wires of the wire harness 5 passing through the bore of the braided tube (covering member) 30, the first fixing member 32 and the second fixing member 33 hold only the braided tube 30. The first fixing member 32 and the second fixing member 33 have generally the same structure, and therefore only the first fixing member 32 will be described below.

As shown in Fig. 5, the first fixing member 32 is formed, for example, by injection molding a synthetic resin, and includes a generally cylindrical body 38 having a bore for the passage of the wire bundle 31 of the wire harness 5 therethrough, and the retaining piece portion 34 formed on and projecting from an outer peripheral surface of the body 38. The first fixing member 32 is molded integrally on the braided tube 30 by insert molding in such a manner that one end portion of the braided tube 30 is embedded in one end portion of the body 38 in concentric relation thereto. Thus, the first fixing member 32 holds only the braided tube 30 provided on the wire harness 5. Similarly, a body 39 of the second fixing member 33 holds only the braided tube 30 on the wire harness 5.

In this construction, when the folded-back portion of the wire harness 3, moving forward and rearward in accordance with the sliding movement of the slider 14, is caught by a foreign matter, and therefore is prevented from forward and rearward movement, tension is applied to the wire harness 5. At this time, a load acts only on the braided tube 30, and the sliding movement of the slider 14 is prevented by the braided tube 30, thereby preventing the load from acting on the wire bundle 31 passing through the bore of the braided tube 30.

As described above, in the installation apparatus 1 of this embodiment, the wire harness 5 is covered with the braided tube 30 having excellent flexibility, relatively small friction on its surface and excellent wear resistance, and therefore in accordance with the sliding movement of the slider 14, the wire harness 5 can smoothly move in sliding contact with the inner surfaces of the case 10, and can be flexibly deformed, and also can withstand the friction due to sliding contact with the inner surfaces of the case 10. And besides, the first fixing member 32 and the second fixing member 33 (which hold the wire harness 5, and fix the wire harness 5 respectively to the case 10 and the slider 14) hold only the braided tube 30, and therefore even when the wire harness 5 is subjected to tension, a load is applied only to the braided tube 30, and will not act on the wire bundle 31 of the wire harness 5.

Furthermore, in the installation apparatus 1 of this embodiment, the first fixing member 32 and the second fixing member are formed integrally with the braided tube 30 by insert molding, and therefore the first and second fixing members can positively and firmly hold only the braided tube 30.

### (Second Embodiment)

Next, a second embodiment of an installation apparatus of the invention will be described with reference to Fig. 6. The installation apparatus of this embodiment differs from the installation apparatus of the first embodiment only in first and second fixing members, and the other members are common to the two embodiments, and therefore explanation thereof will be omitted. The first fixing member and the second fixing member have generally the same structure, and therefore only the first fixing member will be described below. Fig. 6 is a cross-sectional view showing the first fixing member used in the second embodiment of the installation apparatus of the invention.

The first fixing member 32 shown in Fig. 6 includes a generally cylindrical body 38 having a bore for the passage of a wire bundle 31 of a wire harness 5 therethrough, and one end portion of this body 38 is inserted into a braided tube 30 to be interposed between the braided tube 30 and the wire bundle 31 of the wire harness 5. A plurality of retaining claws 40 are formed on and project from an outer peripheral surface of the body 38 at the one end portion thereof, and these retaining claws 40 pass through meshes of the braided tube 30, and are retainingly engaged with the braided tube 30. Incidentally, by increasing the diameter of the braided tube 30 by axially contracting this braided tube 30, the body 38 can be easily inserted into the braided tube 30. The meshes of the braided tube 30 can be spread or enlarged by axially contracting the braided tube 30, and in this condition the retaining claws 40 can be easily passed through the meshes. Thus, the first fixing member 32 holds only the braided tube 30 on the wire harness 5. Similarly, the second fixing member 33 holds only the braided tube 30.

In this embodiment, each of the first and second fixing members 32 and 33 has the retaining claws 40, and these retaining claws 40 pass through the peripheral wall of the braided tube 30, and therefore only the braided tube 30 can be positively and easily held by the first and second fixing members.

### (Third Embodiment)

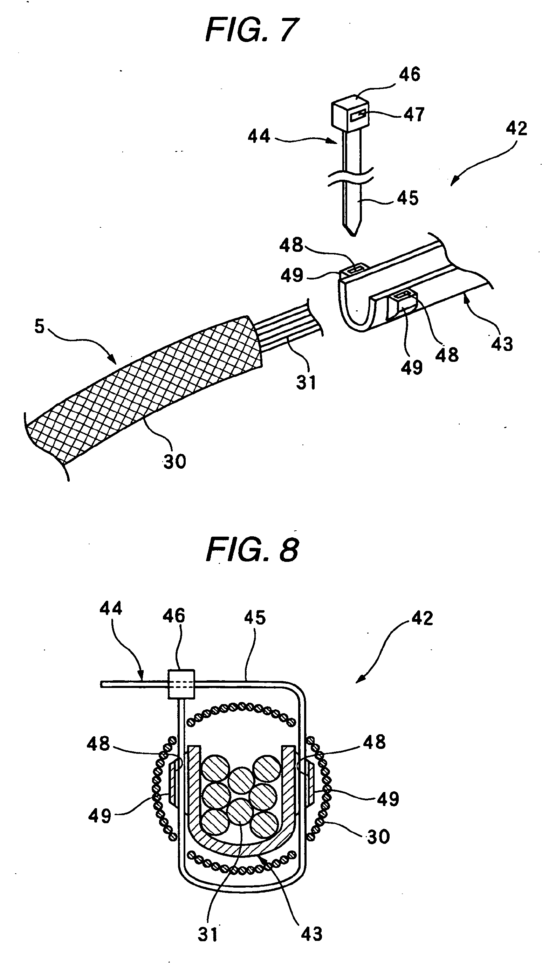

Next, a third embodiment of an installation apparatus of the invention will be described with reference to Figs. 7 and 8. The installation apparatus of this embodiment differs from the installation apparatus of the first embodiment only in first and second fixing members, and the other members are common to the two embodiments, and therefore explanation thereof will be omitted. The first fixing member and the second fixing members have generally the same structure, and therefore only the first fixing member will be described below. Fig. 7 is a perspective view showing the first fixing member used in the third embodiment of the installation apparatus of the invention, and Fig. 8 is a cross-sectional view showing the first fixing member of Fig. 7.

As shown in Fig. 7, the first fixing member 42 of this embodiment includes a body 43 which is inserted at its distal end portion into one end portion of a braided tube 30 to be interposed between the braided tube 30 and a wire bundle 31 in such a manner that the wire bundle 31, extending from the one end of the braided tube 30, is received in the body 43, and a fastening band 44 which is wound around the outer periphery of the body 43.

The body 43 is made, for example, of a synthetic resin, and is formed into a generally U-shaped cross-section, and the wire bundle 31, extending from the one end of the braided tube 30, is received in the body 43, and the distal end portion of this body 43 is inserted into the one end portion of the braided tube 30. Incidentally, by increasing the diameter of the braided tube 30 by axially contracting this braided tube 30, the distal end portion of the body 43 can be easily inserted into the braided tube 30.

The fastening band 44 includes a strip-like band portion 45 having flexibility, and a retaining portion 46 formed at a proximal end of the band portion 45. A series of retaining grooves are formed in one side of the band portion 45, and are arranged in a longitudinal direction thereof. A slit 47 for the insertion of the distal end portion of the band portion 45 thereinto is formed through the retaining portion 46, and a retaining claw for retaining engagement in the retaining groove of the band portion 45 is formed within the slit 47.

The body 43 has through holes 48 provided at the distal end portion thereof which is to be inserted into the one end portion of the braided tube 30, and the band portion 45 of the fastening band 44 is passed through these through holes 48. A pair of protruding portions 49 and 49 are formed on and project respectively from left and right side walls of the distal end portion of the body 43, and the through holes 48 are formed through these protruding portions 49, respectively. A retaining piece portion, corresponding to the retaining piece portion 34 of the first fixing member 32 of the first embodiment for insertion into the retaining hole 35 in the opening portion 23 of the cap 12, is formed at the proximal end portion of the body 43 exposed from the braided tube 30.

In the first fixing member 42 of this construction, the band portion 45 of the fastening band 44 is passed through that portion of the braided tube 30 disposed just above one (left in the drawings) through hole 48 provided at the distal end portion of the body 43, and is subsequently passed through this through hole 48, and is further passed through the braided tube 30 to project downwardly from this braided tube 30. Then, this downwardly-projecting band portion 45 is extended around the outer periphery of the braided tube (and hence around the outer periphery of the body 43), and is passed through that portion of the braided tube 30 disposed beneath the other through hole 48, and is subsequently passed through this through hole 48, and is further passed through the braided tube 30 to project upwardly from the braided tube 30. The upwardly-projecting band portion 45 is passed through the slit 47 formed in the retaining portion 46 of the fastening band 44, and tightly binds the braided tube 30 and the body 43 together, and is retained in this condition. The wire bundle 31, received in the body 43, is not bound by the fastening band 44, and can move within the body 43. Thus, in the first fixing member 42, the fastening band 44 is passed through the peripheral wall of the braided tube 30, and only the braided tube 30 is held between the body 43 and the fastening band 44, so that only the braided tube 30 is positively and firmly held by the first fixing member 42.

### (Fourth Embodiment)

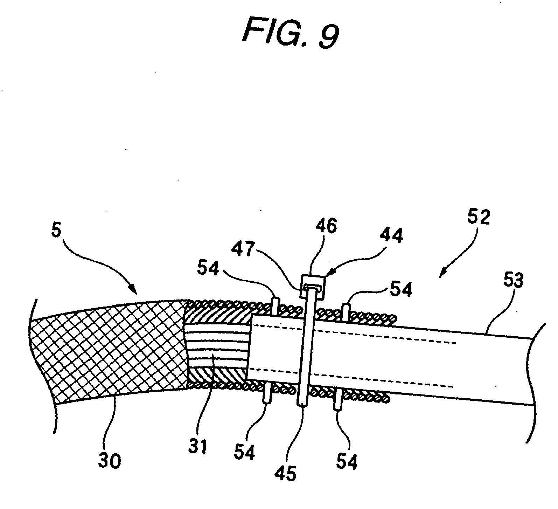

Next, a fourth embodiment of an installation apparatus of the invention will be described with reference to Fig. 9. The installation apparatus of this embodiment differs from the installation apparatus of the first embodiment only in first and second fixing members, and the other members are common to the two embodiments, and therefore explanation thereof will be omitted. The first fixing member and the second fixing member have generally the same structure, and therefore only the first fixing member will be described below. Fig. 9 is a plan view showing the first fixing member used in the fourth embodiment of the installation apparatus of the invention.

As shown in Fig. 9, the first fixing member 52 of this embodiment includes a body 53 which is inserted at its distal end portion into one end portion of a braided tube 30 to be interposed between the braided tube 30 and a wire bundle 31 in such a manner that the wire bundle 31, extending from the one end of the braided tube 30, is received in the body 53, and a fastening band 44 which is wound around the outer periphery of the body 53.

The body 53 is made, for example, of a synthetic resin, and is formed into a cylindrical tubular shape, and the wire bundle 31, extending from the one end of the braided tube 30, is received in the body 53, and the distal end portion of this body 53 is inserted into the one end portion of the braided tube 30. A plurality of projecting portions 54 for extending radially outwardly through the one end portion of the braided tube 30 are formed on an outer peripheral surface of the body 53 at the distal end portion thereof. Two groups of projecting portions 54 are disposed respectively on two circles which coincide with the circumference of the body 53, and are spaced from each other in the longitudinal direction of the braided tube 30. A retaining piece portion, corresponding to the retaining piece portion 34 of the first fixing member 32 of the first embodiment for insertion into the retaining hole 35 in the opening portion 23 of the cap 12, is formed at the proximal end portion of the body 53 exposed from the braided tube 30.

In the first fixing member 52 of this construction, the one end portion of the braided tube 30 is axially contracted so as to increase the diameter thereof and also to spread or enlarge the meshes of the braided tube 30, and in this condition the distal end portion of the body 53 is inserted into the one end portion of the braided tube 30. Then, as the braided tube 30 is restored into its original shape with its diameter decreasing, the plurality of projecting portions 54, formed at the distal end portion of the body 53, extend radially through the one end portion of the braided tube 30. Then, the fastening band 44 is wound around that portion of the braided tube 30 lying between the two groups of projecting portions 54, and tightly binds the braided tube 30 and the body 53 together. In this condition, the wire bundle 31, received in the body 53, is not bound by the fastening band 44, and can move within the body 53. Thus, in the first fixing member 52, the projecting portions 54 of the body 53 are passed through the peripheral wall of the braided tube 30, and only the braided tube 30 is held between the body 53 and the fastening band 44, so that only the braided tube 30 is positively and firmly held by the first fixing member 52.

The present invention is not limited to the above embodiments, and suitable modifications, improvements, etc., can be made.

In the above embodiment, each of the first and second fixing members 32 and 33 is so constructed as to hold only the braided tube 30. However, in order that a load will not act on the wire bundle 31, at least one of the first and second fixing members 32 and 33 need to hold only the braided tube 30. Therefore, one of the first and second fixing members 32 and 33 may be so constructed as to be firmly fastened on the braided tube 30 to be fixed to the wire bundle 31 passing through the interior of this braided tube, that is, to hold also the wire bundle 31 as is the case with the related clamp.

Although the invention has been illustrated and described for the particular preferred embodiments, it is apparent to a person skilled in the art that various changes and modifications can be made on the basis of the teachings of the invention. It is apparent that such changes and modifications are within the spirit, scope, and intention of the invention as defined by the appended claims.

## Claims

1. An installation apparatus (1) for installing a wire harness (5) over a fixed structural body and a movable structural body (2) which is slidably provided to the fixed structural body, the installation apparatus (1) comprising:
a case (10) that receives the wire harness (5) such that the wire harness (5) extends in a sliding direction of the movable structural body (2), and is folded back into a generally U-shape;
a slider (14) that is slidably supported on the case (10) so as to move in the sliding direction of the movable structural body (2), and is movable in accordance with a sliding movement of the movable structural body (2);
a first fixing member (32) that holds a proximal end-side portion of the wire harness (5) extending from the folded-back portion thereof toward a proximal end of the wire harness (5), and fixes the wire harness (5) to the case (10); and
a second fixing member (33) that holds a distal end-side portion of the wire harness (5) extending from the folded-back portion thereof toward a distal end of the wire harness (5), and fixes the wire harness (5) to the slider (14),
**characterized in that**
the wire harness (5) is covered with a braided tube (30); and at least one of the first fixing member (32) and the second fixing member (33) holds only the braided tube (30) covering the wire harness (5).

2. The installation apparatus (1) according to claim 1, wherein the braided tube (30) is formed by weaving a resin filament into a tubular shape.

3. The installation apparatus (1) according to claim 1, wherein at least one of
the first fixing member (32) and the second fixing member (33) is formed integrally with the braided tube (30) in a state that one end portion of the braided tube (30) is embedded in one end portion of the at least one of the first fixing member (32) and the second fixing member (33) in concentric relation thereto.

4. The installation apparatus (1) according to claim 1, wherein at least one of the first fixing member (32) and the second fixing member (33) has a retaining portion (34, 36); and
wherein the retaining portion (34, 36) penetrates a peripheral wall of the braided tube (30).

## Patentansprüche

1. Installationsvorrichtung (1) zum Installieren eines Kabelbaums (5) über einem stationären strukturellen Körper und einem beweglichen strukturellen Körper (2), der verschiebbar an dem stationären strukturellen Körper vorhanden ist, wobei die Installationsvorrichtung (1) umfasst:
ein Gehäuse (10), das den Kabelbaum (5) so aufnimmt, dass sich der Kabelbaum (5) in einer Gleitrichtung des beweglichen strukturellen Körpers (2) erstreckt und er in einer im Allgemeinen U-artigen Form eingerollt ist;
ein Gleitteil (14), das gleitend von dem Gehäuse (10) getragen wird, so dass es sich in der Gleitrichtung des beweglichen strukturellen Körpers (2) bewegt, und das entsprechend einer Gleitbewegung des beweglichen strukturellen Körpers (2) bewegt werden kann;
ein erstes Fixierelement (32), das einen Abschnitt der Seite des hinteren Endes des Kabelbaums (5) hält, der sich von dem eingerollten Abschnitt desselben aus zu einem hinteren Ende des Kabelbaums (5) erstreckt, und den Kabelbaum (5) an dem Gehäuse (10) fixiert; und
ein zweites Fixierelement (33), das einen Abschnitt der Seite des vorderen Endes des Kabelbaums (5) hält, der sich von dem eingerollten Abschnitt desselben zu einem vorderen Ende des Kabelbaums (5) hin erstreckt, und den Kabelbaum (5) an dem Gleitteil (14) fixiert,
**dadurch gekennzeichnet, dass**
der Kabelbaum (5) mit einer geflochtenen Röhre (30) abgedeckt ist und wenigstens das erste Fixierelement (32) oder das zweite Fixierelement (33) nur die geflochtene Röhre (30) hält, die den Kabelbaum (5) abdeckt.

2. Installationsvorrichtung (1) nach Anspruch 1, wobei die geflochtene Röhre (30) ausgebildet wird, indem ein Kunststofffaden in eine Röhrenform gewebt wird.

3. Installationsvorrichtung (1) nach Anspruch 1, wobei wenigstens das erste Fixierelement (32) oder das zweite Fixierelement (33) in einem Zustand integral mit der geflochtenen Röhre (30) ausgebildet ist, in der ein Endabschnitt der geflochtenen Röhre (30) in einem Endabschnitt des wenigstens ersten Fixierelementes (32) oder des zweiten Fixierelementes (33) in konzentrischer Beziehung dazu eingebettet ist.

4. Installationsvorrichtung (1) nach Anspruch 1, wobei wenigstens das erste Fixierelement (32) oder das zweite Fixierelement (33) einen Rückhalteabschnitt (34, 36) aufweist; und
wobei der Rückhalteabschnitt (34, 36) eine Umfangswand der geflochtenen Röhre (30) durchdringt.

## Revendications

1. Appareil d'installation (1) destiné à installer un faisceau électrique (5) au-dessus d'un corps structurel fixe et d'un corps structurel mobile (2) qui est prévu de manière coulissante sur le corps structurel fixe, l'appareil d'installation (1) comprenant :
un boîtier (10) qui reçoit le faisceau électrique (5) de telle sorte que le faisceau électrique (5) s'étend dans une direction coulissante du corps structurel mobile (2), et est replié pour former généralement un U ;
un coulisseau (14) qui est supporté de manière coulissante sur le boîtier (10) de manière à se déplacer dans la direction coulissante du corps structurel mobile (2), et est mobile conformément à un déplacement coulissant du corps structurel mobile (2) ;
un premier élément de fixation (32) qui maintient une partie côté extrémité proximale du faisceau électrique (5) s'étendant de la partie repliée de celui-ci en direction d'une extrémité proximale du faisceau électrique (5), et fixe le faisceau électrique (5) au boîtier (10) ; et
un second élément de fixation (33) qui maintient une partie côté extrémité distale du faisceau électrique (5) s'étendant de la partie repliée de celui-ci vers une extrémité distale du faisceau électrique (5), et fixe le faisceau électrique (5) sur le coulisseau (14),
**caractérisé en ce que**
le faisceau électrique (5) est recouvert par un tube tressé (30) ; et au moins un parmi le premier élément de fixation (32) et le second élément de fixation (33) maintient uniquement le tube tressé (30) recouvrant le faisceau électrique (5).

2. Appareil d'installation (1) selon la revendication 1, dans lequel le tube tressé (30) est formé en tissant un filament de résine pour obtenir une forme tubulaire.

3. Appareil d'installation (1) selon la revendication 1, dans lequel au moins un parmi
le premier élément de fixation (32) et le second élément de fixation (33) est formé de manière solidaire avec le tube tressé (30) dans un état dans lequel une partie d'extrémité du tube tressé (30) est encastrée dans une partie d'extrémité du au moins un parmi le premier élément de fixation (32) et le second élément de fixation (33) dans une relation concentrique par rapport à celui-ci.

4. Appareil d'installation (1) selon la revendication 1, dans lequel au moins un parmi le premier élément de fixation (32) et le second élément de fixation (33) présente une partie de retenue (34, 36) ; et
dans lequel la partie de retenue (34, 36) pénètre dans une paroi périphérique du tube tressé (30).
